# EUROPÄISCHE PATENTSCHRIFT

(11) **EP 0 396 059 B1**
(45) Veröffentlichungstag und Bekanntmachung des Hinweises auf die Patenterteilung: **18.11.1993**
(21) Anmeldenummer: 90108143.0
(22) Anmeldetag: 27.04.1990
(51) Int. Cl.: A47J 27/14, A47J 43/046, G01G 19/56

(54) **Küchenmaschine**
Food processor
Robot de cuisine

(30) Priorität: 03.05.1989 DE 3914641
(43) Veröffentlichungstag der Anmeldung: 07.11.1990
(73) Patentinhaber: BSG-Schalttechnik GmbH & Co. KG, D-72336 Balingen (DE)
(72) Erfinder: Geiger, Peter, D-7460 Balingen (DE)
(74) Vertreter: Otte, Peter, Dipl.-Ing.

(56) Entgegenhaltungen:
- EP-A- 0 192 771
- DE-A- 3 144 103
- FR-A- 2 528 575
- US-A- 4 362 219

## Beschreibung

### Stand der Technik

Die Erfindung betrifft eine Küchenmaschine nach dem Oberbegriff des Anspruchs 1.

Bei einer bekannten Küchenmaschine dieser Art nach US-A-4 362 219 sind an deren Frontfläche herausziehbare Wägearme angeordnet. In einem vorderen Einschnitt des jeweils herausgezogenen Wägearms wird ein Gewichtskorb oder auch eine üblicherweise einen Teil der Maschine bildende Schale oder Rohrschüssel manuell von der Bedienungsperson eingehängt und durch die Verkippung, die der Wägearm gegen eine Flachfeder bei Beladung mit dem Wiegegut erleidet, ergibt sich über eine Verzahnung innerhalb eines Getriebes eine Drehbewegung, die auf eine Codierscheibe wirkt, deren Verdrehung dann elektrisch mittels geeigneter Schaltungen, die auch einen Mikroprozessor einschließen, erfaßt und in eine Gewichtsanzeige umgewandelt und an einer entsprechenden Anzeigeeinrichtung der Küchenmaschine angezeigt wird. Der jeweilige Gewichtskorb kann dann gleichzeitig nach Umsetzung auch für die Bearbeitungsvorgänge der eingegebenen Nahrungsmittelingredienzen durch die Küchenmaschine eingesetzt werden.

Abgesehen von den Umständlichkeiten, die bei dieser bekannten Küchenmaschine unumgänglich sind, nämlich separates Herausziehen eines jeweils gewünschten Wiegearms, was zunächst eine grobe Vorabschätzung des Gewichts erforderlich macht, da den in diesem Fall vorhandenen zwei Wiegearmen jeweils unterschiedliche Maximalgewichte zugeordnet sind, dürfte sich durch die erforderliche, zunächst mechanische Getriebeumsetzung der Wiegearmauslenkung und anschließender elektrischer Codierung ein Genauigkeitsverlust durch Reibung, Hystereseeinflüsse u.dgl. nicht vermeiden lassen. Problematisch ist auch der Umstand, daß keine fortlaufenden Messungen, beispielsweise durch zwischenzeitliche Rückstellung des Meßergebnisses durchgeführt werden können, weil dann, wenn das Gewicht einer geringeren Beigabe zu messen ist, der Wiegekorb gewechselt werden muß. Es ist also nicht möglich, in einen Wiegekorb alle Ingredienzen für eine gewünschte Nahrungszubereitung aufeinanderfolgend durch Abwiegen in ihrer Menge zu bestimmen und einzugeben.

Diese bekannte Küchenmaschine verfügt daher lediglich über ein separates Waagensystem, ohne daß es zu einer Küchenmaschine und Waagensystem tatsächlich integrierenden Konzeption kommt.

In dieser Hinsicht stellt die aus dem DE-U-18 94 430 bekannte Küchenmaschine insofern eine Weiterentwicklung dar, als ein wenn auch nur vergleichsweise sehr grob arbeitendes Waagensystem in einem der Stellfüße dar Küchenmaschine eingearbeitet ist, wobei der Aufbau im einzelnen so getroffen ist, daß einer der Stellfüße als Rohr gleitverschieblich gelagert und gegen eine Federvorspannung nach innen in das Küchenmaschinengehäuse gedrückt werden kann.

Mit einer entsprechenden Verzahnung am Außenumfang des eines der Stützfüße der Küchenmaschine bildenden, vertikal verschieblichen Rohres kämmt ein drehbar gelagertes Ritzel, welches gleichzeitig einen mechanischen Zeiger lagert, der dann nach außen längs einer halbkreisförmigen Skala eher grob gerasterte Gewichtsunterschiede anzuzeigen in der Lage ist.

Genauere Messungen sind mit einer solchen Küchenmaschine nicht möglich, weil nicht beherrschbare Reibungseinflüsse bezüglich der Gleitlagerung des Rohres/Küchenmaschinenfußes sowie im Bereich der Verzahnung auftreten.

Bei der Zubereitung von Nahrungsmitteln unter Verwendung von Küchenmaschinen, beispielsweise bei der (Brot)-Teigherstellung oder bei der Zusammenstellung von Nahrungsmitteln unter Verwendung bestimmter Rezepturen ist die Einhaltung von auf das Gewicht der jeweiligen Bestandteile bezogenen Mengenangaben der Zubereitung häufig unerläßlich und beispielsweise bei der Bereitung von Nahrungsmitteln für Diabetiker auch aus gesundheitlichen Gründen unverzichtbar.

Andererseits handelt es sich aber bei den hier ins Auge gefaßten Küchenmaschinen um elektrisch angetriebene Geräte, wobei die Aufnahmebehälter für die Nahrungsmittel, die miteinander etwa durch einen Mixvorgang oder durch Kneten verbunden und in die gewünschte Form gebracht werden sollen, häufig beim Rühren oder Kneten erheblich Kräfte aufnehmen müssen im Verriegelungsbereich der jeweiligen Schüssel mit der Maschine.

Führt man die Gewichtsbestimmungen separat zur Küchenmaschine oder lediglich an dieser durch (siehe die eingangs genannte US-PS 4 362 219), um die Ingredienzen für eine Zubereitung jeweils separat in ihrem Gewicht zu bestimmen und dann in eine gemeinsame Schüssel einzugeben, dann ergibt sich ein erheblicher Aufwand mit der Notwendigkeit, den Behälter der Küchenwaage für jeden neuen Nahrungsbestandteil erneut reinigen zu müssen, was insbesondere dann, wenn es sich um flüssige Bestandteile handelt, auch viel Arbeit macht.

Sehr häufig werden daher genaue Gewichtsbestimmungen unterlassen oder nur überschlägig durchgeführt, so daß nicht immer mit den gewünschten Resultaten gerechnet werden kann. Häufig ist auch nicht immer eine Küchenwaage vorhanden oder wird gerade an anderer Stelle benötigt, wobei übliche Küchenwaagen auch nicht immer sehr genaue Gewichtsbestimmungen zulassen, da sie meistens auf dem Federwaagenprinzip mit ungenauer analoger Anzeige basieren.

Bei einem elektrischen Mikrowellenherd zum Kochen oder Erhitzen von Speisen ist es bekannt (EP-A-0192771), den eine mechanische Drehbewegung durchführenden Drehteller in eine untere, drehangetriebene Lagerfläche und eine obere, der Aufnahme von Speisen dienende Plattform zu unterteilen, wobei diese beiden Teile durch zwei parallel verlaufende Blattfedern miteinander verbunden sind, die beidseitig jeweils fest eingespannt sind (sogenanntes Roberval-Prinzip).

Um die Einschaltdauer des Mikrowellenherds zu bestimmen, wird als weitere Variable die Menge des eingebrachten Nahrungsmittels, d.h. deren Gewichtsangabe benötigt. Zu diesem Zweck werden von dem Roberval-Mechanismus ausgehende Vibrationen erfaßt, und zwar mit Hilfe eines magnetischen Jochs und auf magnetischem Wege aus dem Erhitzungsraum nach außen geführt. In diesem Zusammenhang werden noch eine Vielzahl von Schaltungen vorgeschlagen, um unerwünschter Störungen oder sonstiger Signalverfälschungen, die hier auftreten können, Herr zu werden.

Schließlich ist es bei einem Meßwertgeber für Gewichte bekannt (FR-A-2 528 575), eine obere Plattform, die der Wägung aufgelegten Gutes dient, gegenüber einer unteren Lagerplattform mit Hilfe eines beidseitig fest eingespannten Verbindungsstabs abzukoppeln und am Verbindungsstab bei Druck oder Zug elektrische Signale erzeugende Meßaufnehmer anzuordnen.

Der Erfindung liegt die Aufgabe zugrunde, eine Küchenmaschine zur Durchführung maschineller Bearbeitungsvorgänge an Nahrungsmitteln wie Mixen, Rühren, Teig kneten u.dgl. zu schaffen, die in der Lage ist, das Gewicht von in die jeweilige Bearbeitungsschale eingebrachten Nahrungsmittel vorzugsweise noch vor einem nachfolgenden Bearbeitungsvorgang zu bestimmen, ohne daß es zusätzlicher Manipulationen an der Küchenmaschine, beispielsweise ein Umsetzen der Aufnahmeschale mit den Nahrungsmitteln, bedarf.

### Vorteile der Erfindung

Die Erfindung löst diese Aufgabe mit den kennzeichnenden Merkmalen des Anspruchs 1 und hat den Vorteil, daß durch eine eine vollständige Reibungsfreiheit ermöglichenden Entkopplung eines äußeren stationären Standgehäuses gegenüber dem eigentlichen Küchenmaschinensystem über eine Blattfeder/Lenkeranordnung, in Verbindung mit einem separaten Entkopplungsträger oder Entkopplungsrahmen, der dann seinerseits erst die eigentliche Küchenmaschine mit ihren verschiedenen Teilkomponenten lagert, hochgenaue Messungen, auch aufeinanderfolgend möglich werden, alles unter der Regie eines in geeigneter Weise ausgebildeten und programmierten Mikroprozessors oder einer ähnlichen Steuerschaltung.

Es gelingt daher, das bisher als unüberwindbar erscheinende Problem bei solchen mechanische Bearbeitungen durchführenden Küchenmaschinen, nämlich gleichzeitig Wiegevorgänge durchzuführen, zu lösen, wobei einerseits ein einwandfreier Küchenmaschinenbetrieb ermöglicht wird und andererseits hochgenaue Gewichtsmessungen durchgeführt werden können, denn der Entkopplungsträger ist an dem stationären Standgehäuse, Außenteilgehäuse oder auch nur an einem L-förmigen Lagerteil über Plattenfedern oder Blattfedern aufgehängt, was einerseits eine starre, praktisch auch bei auftetenden Belastungen wegfreie Aufhängung bedeutet, andererseits aber sicherstellt, daß durch eine entsprechende Zuordnung von geeigneten Meßsensoren, bevorzugt Dehnungsmeßstreifen (DMS) an oder im Bereich der Blattfedern Wiegevorgänge im grammgenauen Bereich durchgeführt werden können. Üblicherweise sind DMS-Gewichtssensoren derart empfindlich, daß reproduzierbare Genauigkeiten bis zu fünf Stellen (mindestens) erzielt werden können, so daß bei einer Gesamtbelastung von beispielsweise 1 kg die erwähnte Grammgenauigkeit sicher erreicht wird.

Durch das in einer Küchenmaschine integrierte Waagensystem ist also sichergestellt, daß hochgenaue Gewichtsbestimmungen von Nahrungsmittelbestandteilen, die in Verbindung mit der Küchenmaschine einer Verarbeitung oder Bearbeitung zuzuführen sind, durchgeführt werden können, wobei auch aufeinanderfolgende Messungen problemlos möglich sind, da die Erfindung die häufig schon bei Küchenmaschinen für deren Ablauf- und Betriebssteuerung vorhandenen Mikroprozessoren ausnutzt bzw. die Verwendung solcher Mikroprozessorsysteme in Verbindung mit Küchenmaschinen vorschlägt und den Mikroprozessor gleichzeitig für die beiden Aufgabenbereiche der Betriebssteuerung der Küchenmaschine einerseits und der Gewichtsbestimmung von Nahrungsmittelingredienzen andererseits einsetzt.

Vorteilhaft ist ferner, daß durch die Anordnung des Meßaufnehmers über entkoppelnde Blattfedern als Zwischenglied der Wiegevorgang auf das gesamte Gewicht bzw. eventuell auch auf ein Teilgewicht der Küchenmaschine bezogen wird, wobei dann die einzelnen Wiegevorgänge durch Differenzmessung und Vergleich des jeweils vorhergehenden Gewichtes realisiert werden können und gleichzeitig vermieden wird, daß im mechanischen Übertragungsbereich etwa zwischen dem Rührsystem und der Schüssel und dem Maschinengehäuse andererseits Meßaufnehmer angeordnet werden müßten, die an dieser Stelle einer starken Beanspruchung oder Zerstörung ausgesetzt sind bzw. nicht in der Lage sind, an diesen Schnittstellen mit hinreichender Genauigkeit zu arbeiten.

Ein besonderer Vorteil besteht noch darin, daß neben der bevorzugten Anwendung von DMS im Grunde auch sonstige Arten geeigneter Aufnehmerprinzipien als Meßgeber für die Gewichtsbestimmung verwendet werden können, beispielsweise Weg-Kraftaufnehmer, Tauchspulen-Differenzanordnung, Piezoeffektsysteme, induktive, kapazitive und/oder optische Näherungssysteme oder -schalter, Saitenwaagen u.dgl.

Da das Waagensystem der Küchenmaschine in Verbindung mit einem Mikroprozessor zugeordnet wird, der je nach seiner Inanspruchnahme über hinreichende Speicherplätze verfügt, sind mit besonderem Vorteil auch aufeinanderfolgende Messungen möglich, wobei also die Bedienungsperson beispielsweise in eine Rührschüssel zunächst eine vorgegebene Menge an Mehl eingibt, anschließend das über ein geeignetes Display (Flüssigkristallanzeige) das erreichte Gewicht anzeigende Waagensystem auf Null zurücksetzt, etwa durch Betätigen einer geeigneten Drucktaste an der Küchenmaschine, anschließend eine vorgegebene Gewichtsmenge Eier beigibt, daraufhin die vorgegebene Gewichtsmenge Wasser beigibt, jeweils nach Rücksetzen der ursprünglichen Anzeige, wobei diese Anzeigen, falls gewünscht, auch gespeichert und für eine nachfolgende Überprüfung bereitgehalten, auch gegebenenfalls gleichzeitig weiter angezeigt werden können.

Erst nachdem dann der gesamte Wiegevorgang für die Ingredienzen abgeschlossen ist, wird die Maschine in die zweite Betriebsart der mechanischen Behandlung der Nahrungsmittelbestandteile überführt, so daß der die Gesamtsteuerung übernehmende Mikroprozessor nicht gleichzeitig sowohl Waagensignale auswerten und den Arbeitsablauf steuern muß, sondern nur bei stehender Maschine wiegt und bei laufender Maschine lediglich für deren Betriebsablaufsteuerung verantwortlich ist. Hierdurch ergibt sich eine kostengünstige Lösung auch für das einzusetzende Elektroniksystem.

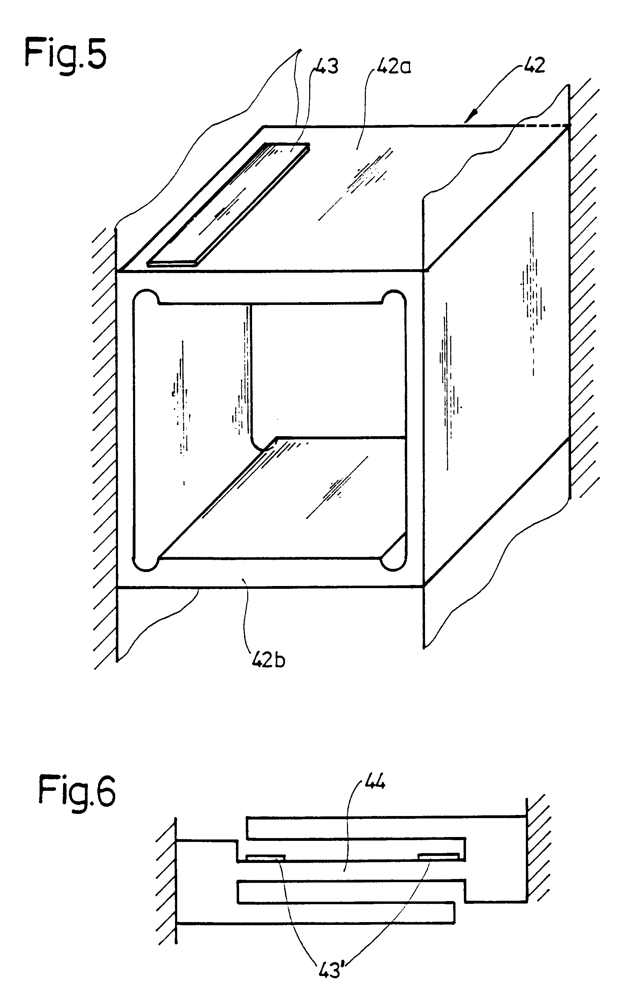

Durch die in den Unteransprüchen aufgeführten Maßnahmen sind vorteilhafte Weiterbildungen und Verbesserungen der im Hauptanspruch angegebenen Küchenmaschine möglich. Besonders vorteilhaft kann hier die Ausbildung der Blattfederlagerung auch in Form eines rechteckigen Hohlblocks entsprechend Fig. 5 realisiert werden, der über geeignete elastische Eigenschaften verfügt und bei nur ganz geringen Auslenkungen, die jedoch für die Gewichtserfassung durch DMS vollkommen ausreichend sind, für eine besonders sichere Fixierung der vom Entkopplungsträger gelagerten Küchenmaschinenkomponenten an dem stationären Gehäuseteil sorgt.

### Zeichnung

Ein Ausführungsbeispiel der Erfindung ist in der Zeichnung dargestellt und wird in der nachfolgenden Beschreibung näher erläutert. Es zeigen:
- Fig. 1: eine erste mögliche Ausführungsform einer Küchenmaschine in schematischer Seitenansicht mit äußerem stationären, fest auf einer Unterlage ruhenden Außenteilgehäuse und innerem Entkopplungsträger;
- Fig. 2: zeigt eine weitere Ausführungsform einer Küchenmaschine ebenfalls in Seitenansicht, wobei jedoch das äußere Teilgehäuse auf ein inneres, durch den Entkopplungsträger oder dessen Erstreckungen praktisch abgedecktes stationäres Unterstützungsglied reduziert ist;
- Fig. 3: zeigt in detaillierterer Darstellung eine mögliche weitere Ausführungsform eines Gewichtssensors nach Art einer Differenz-Tauchspulenanordnung; in
- Fig. 4: ist ein möglicher Programmablauf bei einer ein integriertes Waagensystem aufweisenden Küchenmaschine zur gleichzeitigen Gewichtsbestimmung und zur Verarbeitung von Nahrungsmittelbestandteilen in Form eines Flußdiagramms gezeigt, während die
- Fig. 5 und 6: weitere denkbaren Ausführungsformen von Entkopplungs-Blattfeder- oder -Plattenfedersystemen mit zugeordneten DMS-Meßaufnehmern zeigen.

### Beschreibung der Ausführungsbeispiele

Der Grundgedanke besteht darin, einer mit einem Mikroprozessor ausgerüsteten Küchenmaschine ein Waagensystem zuzuordnen und gleichzeitig derart gegenüber der Küchenmaschine zu entkoppeln, daß jeweilige Wiegevorgänge mit hoher und höchster Genauigkeit bei gleichzeitiger Aufrechterhaltung einwandfreier Lager- und Arbeitseigenschaften der Küchenmaschine realisiert werden können. Hierzu ist ein Entkopplungsträger vorgesehen, der den gesamten Küchenmaschinenaufbau lagert und trägt und der selbst also gegenüber einem stationären Standgehäuse über Flach-, Platten- bzw. Blattfedern, die beidseitig fest eingespannt sind, gehalten ist, so daß es die Blattfedern sind, die bei einer Gewichtsänderung eine Reaktion zeigen, die am besten und mit besonderem Vorteil durch DMS erfaßt werden, die unmittelbar auf den Blattfedern aufliegen und an diesen flächig befestigt sind.

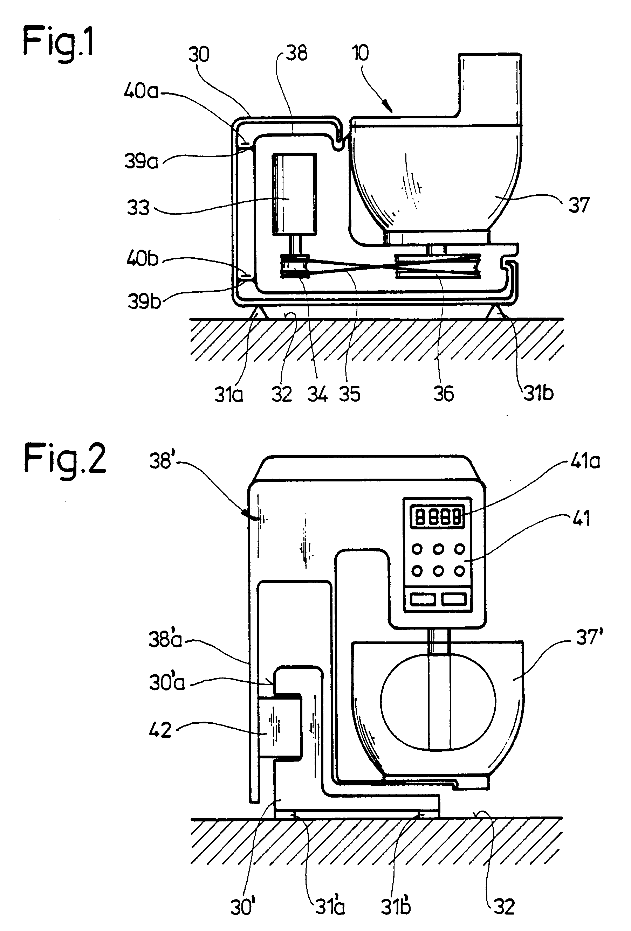

Bei der in Fig. 1 gezeigten Küchenmaschine 10 ist ein äußeres Gehäuse, Teilgehäuse Tragglied bzw. Standgehäuse 30 vorgesehen, welches in grundsätzlich beliebig ausgebildeter Form über eine entsprechende Anzahl von Standfüßen 31a, 31b (in Fig. 1 sind nur zwei zu erkennen, obwohl vorzugsweise mindestens drei, üblicherweise vier Standfüße vorgesehen sind), oder auch mit einer eigenen Bodenplatte fest auf einer stationären Unterlage 32 aufsitzt.

Bei der Küchenmaschine 10 der Fig. 1, die das Standgehäuse 30 lediglich in einer seitlichen Schnittdarstellung zeigt, kann dieses die gesamte Küchenmaschinen-Inneneinrichtung umgeben, also Antriebsmotor 33 mit an diesem vorgesehener Ausgangsriemenscheibe 34, Antriebsriemen 35 zum Abtriebsrad 36 des hier z.B. vorgesehenen, innerhalb der Rührschüssel 37 angeordneten Rührwerks, weitere, nicht dargestellte Teilkomponenten von Schaltern, Zuleitungen und Steuerschaltungen, mit Ausnahme der Rührschüssel 37 selbst und eines Teils des sie lagernden Zwischenträgers bzw. Entkopplungsrahmens.

Dieser Entkopplungsrahmen 38 kann im Grunde von beliebiger Form und Struktur sein und ist von dem es mindestens teilweise umgebenden äußeren Stand-Gehäuse 30 an jeder Stelle vollkommen getrennt, also berührungsfrei zu diesem gehalten, mit Ausnahme einer Standgehäuse 30 und Entkopplungsträger 38 verbindenden Blattfederlagerung, bei dem dargestellten Ausführungsbeispiel bestehend aus zwei lediglich auf einer Seite angeordnete und in der Höhe zueinander versetzte Blattfedern 39a, 39b, die beidseitig fest gelagert und eingespannt, beispielsweise verschweißt sind.

Diese Blattfederlagerung kann im weitesten Sinne natürlich auch durch eine geeignete Plattenfederanordnung, durch einen geringfügig federnd nachgebenden Verbindungsblock wie in Fig. 7 dargestellt, oder durch einen komplizierteren Aufbau von federnden Elementen entsprechend Fig. 8 (auf beide wird noch eingegangen) realisiert sein - hierauf kommt es nicht an. Wesentlich ist lediglich, daß die grundlegende Entkopplungsfunktion zwischen dem äußeren, stationären, auf der Unterlage aufsitzenden Standgehäuse einerseits und dem hier innen sitzenden Entkopplungsträger 38 andererseits gewährleistet ist, wobei aber der Entkopplungsträger 38 über die fest eingespannten Blattfedern vollkommen unverrückbar und sämtlichen Arbeitsbeanspruchungen gewachsen am äußeren Standgehäuse 30 gehalten und gesichert ist. Entscheidend ist daß die Blattfedern 39a, 39b, die hier vorgesehen sind, in der Lage sind, mit zugeordneten, hochempfindlichen Gewichtssensoren jede Gewichtsänderung im Bereich der Rührschüssel 37, und sei sie auch noch so gering, sicher zu erfassen und als eine entsprechende analoge Signaländerung zur Weiterverarbeitung und Auswertung dem vorgesehenen Mikroprozessor zuzuführen.

Es ist der innere Entkopplungsträger 38, der sämtliche anderen Innereien und Elemente der Küchenmaschine lagert, wie in der schematischen Darstellung der Fig. 1 ohne weiteres erkennbar, so daß die Blattfedern 39a, 39b letztendlich die gesamte Küchenmaschine tragen und deren Gewicht auf das äußere Standgehäuse übertragen. Auf den die Entkopplung reibungsfrei realisierenden Blattfedern 39a, 39b sind dann in der Zeichnung zum besseren Verständnis deutlich getrennte DMS-Gewichtssensoren 40a, 40b angeordnet, die ihrerseits in für sich gesehen bekannter elektrischer Verschaltung, beispielsweise durch Anordnung in Wheatstone'schen Brücken analoge Differenzspannungen erzeugen und zur Weiterverarbeitung entsprechend hochgenau ausgelegten elektrischen Schaltungen, nämlich Analog/Digitalwandlern, Filtern u.dgl. zuleiten, die dann sämtlich dem vorgesehenen Mikroprozessor zuarbeiten.

Es versteht sich, daß eine Vielzahl von Modifikationen möglich ist; ein Musterbeispiel hierfür ist die Ausführungsform der Fig. 2, bei der das an sich ja äußere Standgehäuse oder Teilgehäuse lediglich noch von einem L-förmigen Innenträger 30' gebildet ist, der selbst, wie weiter vorn schon erläutert, über entsprechende Standfüße 31a', 31b' auf der Unterlage 32 aufliegt und an dessen Rückwand 30a' über eine Blattfeder-Meßstruktur in der Ausführungsform der Fig. 7 ein überdeckendes Rückwandteil 38a' des hier im Grunde die gesamte außen sichtbare Form der Küchenmaschine bestimmenden Entkopplungsträgers 38' befestigt ist. Auch bei dieser Ausführungsform lagert der Entkopplungsträger oder auch Entkopplungsrahmen sämtliche Küchenmaschinenkomponenten und -utensilien einschließlich dem hier nicht dargestellten motorischen Antrieb, einem Bedienungsfeld 41, der Rührschüssel 37' usw. Man erkennt, daß auch hier eine sehr gute Standfestigkeit des gesamten Geräts durch die L-Form des Außenträgers 30' gegeben ist.

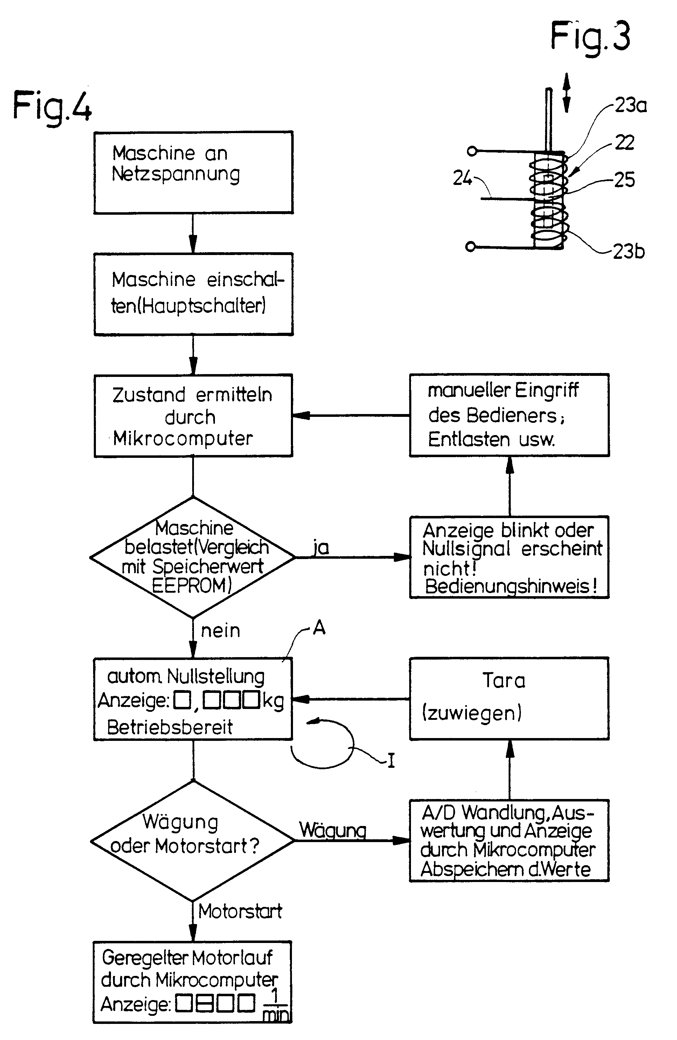

Da bei einer Blattfederabstützung bzw. -lagerung je nach Art und Ausbildung der Blattfedern auch mit einer größeren Wegauslenkung aufgrund eines solchermaßen gebildeten Parallellenkersystems gerechnet werden kann, können auch Varianten von Gewichtssensoren eingesetzt werden, beispielsweise ein Differentialspulensystem 22, welches so ausgebildet ist, wie in Fig. 3 genauer gezeigt. Demnach verfügt das Differentialspulensystem 22 über zwei über eine Mittelanzapfung 24 getrennte Spulenteilwicklungen 23a, 23b, wobei sich ein Ferritkern 25 zu Beginn der Messung in einer Mittel- oder Nullage befinden kann; dieser Ferritkern wird einer gewichtsabhängigen Bewegung unterworfen. Wird die so gebildete Tauchspule 23a, 23b mit einer hochfrequenten Spannung beaufschlagt, dann ergibt sich je nach relativer Lageänderung des Ferritkerns 25 im Tauchspuleninneren eine elektrische Verstimmung der Differentialspule, die nach entsprechender Auswertung der analogen Signaländerung über Analog/Digitalwandler als Istwert-Gewichtssignal dem Mikroprozessor zugeführt werden kann.

Ein Ausführungsbeispiel eines geeigneten Betriebsablaufs (Wiegevorgang und Bearbeitungsvorgang bei einer Küchenmaschine) könnte dann so aussehen, wie in Fig. 4 anhand von einzelnen Funktionsblöcken dargestellt, wobei es sinnvoll ist, darauf hinzuweisen, daß die in den Zeichnungen dargestellten, die Erfindung anhand diskreter Schalt- oder Wirkungsstufen angebenden Blockschaltbilder die Erfindung nicht einschränken, sondern dazu dienen, funktionelle Grundwirkungen besser zu veranschaulichen und spezielle Funktionsabläufe in einer möglichen Realisierungsform anzugeben. Es versteht sich, daß die Erfindung aus einzelnen Schaltbausteinen oder Blöcken in analoger, digitaler oder auch hybrider Technik aufgebaut sein kann oder auch, ganz oder teilweise zusammengefaßt, entsprechende Bereiche von programmgesteuerten digitalen Systemen, beispielsweise also den erwähnten Mikroprozessor, Mikrorechner o.dgl. umfassen kann, was bei vorliegender Ausführungsform bevorzugt wird.

Der vorhandene Mikroprozessor steuert einerseits den maschinell/mechanischen Betriebsablauf der Küchenmaschine, führt also beispielsweise eine Drehzahlregelung, unter Umständen einem vorgegebenen Programmverlauf folgend, durch und zeigt die jeweilige Drehzahl auch an einem Display 41a an, wobei zu dieser Zeit der Mikroprozessor natürlich von Wiegevorgängen betreffenden Aufgaben befreit ist.

Im Stillstand der Maschine, also vor deren Inbetriebnahme als Küchengerät, kann diese dann als Waage eingesetzt werden, entweder um nur gelegentlich einen Gegenstand oder eine Nahrungsmittelmenge abzuwiegen oder auch, um diese nach Eingabe hier in die Rührschüssel anschließend zu verarbeiten.

Der in Fig. 4 dargestellte Funktionsablauf erläutert die jeweiligen Vorgänge mit hinreichender Klarheit anhand der Beschriftung der jeweiligen Funktionsblöcke, wobei noch hinzugefügt werden kann, daß die sich für den Bereich der Wägung ergebende, mit I bezeichnete Schleife natürlich mehrfach wiederholen kann, beispielsweise wenn eine Nahrungszubereitung unter Einbeziehung mehrerer Ingredienzen durchzuführen ist, etwa die Herstellung eines Brotteigs.

Nach der automatischen Nullstellung am Funktionsblock A ergibt sich dann nach der Entscheidung, ob ein Wägeschritt oder der Motorstart durchzuführen ist, bei Entscheidung für die Wägung nach Erfassung des analogen Ausgangssignals des jeweils vorgesehenen Meßaufnehmers und dessen Analog/Digitalwandlung die Auswertung des ermittelten Gewichts und die Anzeige im Display, wobei der Mikrocomputer die gewonnenen Gewichtswerte auch abspeichern kann. Anschließend kann durch Betätigung einer geeigneten äußeren Drucktaste die Nullstellung erneut durchgeführt werden, so daß der Mikroprozessor mit zugeordnetem Waagesystem bereit ist, den nächsten Nahrungsmittelbestandteil in absoluten Gewichtsangaben zu erfassen, anzuzeigen und auszuwerten.

Ist die Möglichkeit vorhanden, den Display zu erweitern, dann können sämtliche Bestandteile, die beispielsweise in die Rührschüssel eingegeben worden sind, aufeinanderfolgend mit einer entsprechenden Numerierung mit ihren absoluten Gewichtsangaben angegeben werden, so daß die Bedienungsperson eine Übersicht behält, welche Bestandteile in welcher Gewichtsmenge sich in der Rührschüssel befinden.

Ist die Wägung abgeschlossen, dann kann die Bedienungsperson den Motorstart einleiten; der Mikroprozessor oder Mikrocomputer verläßt dann die Wiegephase und geht in die Steuerung der elektrisch/mechanischen Betriebsabläufe der Küchenmaschine, beispielsweise Drehzahlsteuerung u.dgl. über.

Die beiden restlichen, in den Fig. 5 und 6 noch als Auswahl aus der Vielzahl der zur Verfügung stehenden Möglichkeiten für die Ausbildung der Blattfedern dargestellten Varianten umfassen einen Blattfeder-Strukturblock (perspektivische Darstellung der Fig. 5, der auf beiden Seiten fest eingespannt oder befestigt oder angeschweißt ist und durch seine im Abstand zueinander angeordneten oberen und unteren Verbindungsflächen 42a, 42b Blattfedereigenschaften realisiert, deren reibungsfreie Entkopplungswirkung bei Gewichtsbelastung durch einen DMS-Sensor 43 an beliebiger Stelle erfaßt wird; bei der Ausführungsform der Fig. 6 ist ein mittlerer Verbindungssteg 44 vorgesehen, der die Blattfedereigenschaften vermittelt und auf den an geeigneter Position bei diesem Ausführungsbeispiel zwei DMS-Sensoren 43' angeordnet sind.

## Patentansprüche

1. Küchenmaschine für Zubereitungsarbeiten wie Mixen, Rühren, Teigkneten u.dgl., mit einem zugeordneten Waagensystem zur Gewichtsbestimmung von zu be- oder verarbeitenden Nahrungsmitteln und einer, gegebenenfalls zusammen mit dem Betriebsablauf der Küchenmaschine gewonnene Wägeergebnisse anzeigenden und auswertenden, zentralen Steuerschaltung (Mikroprozessor), dadurch gekennzeichnet, daß
a) ein äußeres stationäres auf einer Unterlage aufgesetztes Standgehäuse (30, 30') vorgesehen ist, mit welchem
b) reibungsfrei lediglich über eine Blattfederlagerung (39a, 39b; 42, 44) ein zwischengeschalteter Entkopplungsträger (38, 38') verbunden ist, der
c) seinerseits sämtliche Küchenmaschinenkomponenten einschließlich Rührwerk, Antriebsmotor sowie Zubereitungsingredienzen aufnehmende Teile (Schale, Rührschüssel 37, 37') lagert und daß
d) der Blattfederlagerung (39a, 39b; 42, 44) Gewichtssensoren zugeordnet sind, die auf eine physikalische Veränderung im Blattfederbereich bzw. des Entkopplungsträgers bei sich ändernder Bestückung der Küchenmaschine mit Nahrungsmitteln reagieren.

2. Küchenmaschine nach Anspruch 1, dadurch gekennzeichnet, daß die Blattfederlagerung aus zueinander parallel verlaufenden, beidseitig fest eingespannten Einzelblattfedern (39a, 39b) besteht, aus einem rechteckförmigen Hohlstrukturblock (42) oder aus einem Verbindungssteg (44) mit Blattfedereigenschaften.

3. Küchenmaschine nach Anspruch 1 oder 2, dadurch gekennzeichnet, daß das Standgehäuse als äußeres Teilgehäuse (30) den als Entkopplungsrahmen (38) ausgebildeten Entkopplungsträger vollständig umgibt, wobei die Blattfederlagerung als auf einer Seite in der Höhe versetzte Doppelblattfederfixierung zwischen diesen beiden Teilen ausgebildet ist und Randbereiche des äußeren Teilgehäuses (30) im störungsfreien Abstand zu entsprechend angrenzenden Wandbereichen des inneren Entkopplungsrahmens (38) verlaufen bzw. beide Wandbereiche labyrinthartig ineinander übergehen.

4. Küchenmaschine nach Anspruch 1 oder 2, dadurch gekennzeichnet, daß das Standgehäuse ein innerer, L-förmiger Träger (30') ist, der mit Standfüßen auf der stationären Unterlage (32) aufsitzt und über einen Blattfeder-Strukturblock (42) mit dem ansonsten die Form des Küchenmaschinengehäuses aufweisenden Entkopplungsträger (38') verbunden und von diesem auch überdeckt ist.

5. Küchenmaschine nach Anspruch 1, dadurch gekennzeichnet, daß die Gewichtssensoren auf den Blattfedern (39a, 39b; 42, 44) angeordnete Dehnungsmeßstreifen sind, deren analoge Ausgangssignale nach Aufbereitung durch einen Analog/Digitalwandler dem Mikroprozessor zur Auswertung zugeführt sind.

6. Küchenmaschine nach Anspruch 1, dadurch gekennzeichnet, daß als Gewichtssensoren Weg-Kraftaufnehmer in Form von Differenztauchspulenanordnungen, Saitenwaagen, Näherungsschalteranordnungen auf induktiver, kapazitiver und optischer Grundlage vorgesehen sind.

7. Küchenmaschine nach Anspruch 1, dadurch gekennzeichnet, daß der Mikroprozessor im Stillstand der Maschine zur Verarbeitung von Waagensignalen geschaltet ist, die ihm von den im Blattfederbereich angeordneten Gewichtssensoren zugehen, wobei die erfaßten und errechneten Gewichtsangaben vom Mikroprozessor an einer Anzeigetafel (Display 41) angezeigt werden.

8. Küchenmaschine nach Anspruch 7, dadurch gekennzeichnet, daß der Mikroprozessor so geschaltet ist, daß er nach Ablauf einer vorgegebenen Zeitdauer einen ersten erfaßten und angezeigten Gewichtswert in seinen Speicher übernimmt bzw. weiter anzeigt und gleichzeitig eine automatische Nullstellung der Gewichtsanzeige vornimmt und daraufhin erneut zugewogene Nahrungsmittelmengen mit ihrem richtigen Gewicht anzeigt und ebenfalls in einen Speicher übernimmt.

9. Küchenmaschine nach Anspruch 7 oder 8, dadurch gekennzeichnet, daß eine externe Betätigungsanordnung (Druckknopf) vorgesehen ist, um den Mikroprozessor durch Nullstellung seiner Gewichtsanzeige auf einen weiteren, sich anschließenden Gewichtsvorgang vorzubereiten.

## Claims

1. A food processor for preparation procedures such as mixing, stirring, kneading dough and the like, comprising a weighing scale system associated therewith for determining the weight of foods to be prepared or processed and a central control circuit (microprocessor) indicating and evaluating weighing results which, if required, are obtained together with the operating sequence of the food processor, characterised in that
a) an exterior fixed supporting housing (30, 30') is provided, placed on a base, to which
b) an interposed separating carrier (38, 38'), is connected, free of friction, solely by means of a leaf spring mounting (39a, 39b; 42, 44), the said separating carrier
c) itself supporting all the food processor components, including the stirrer, drive motor and the parts which contain the preparation ingredients (basin, bowl 37, 37'), and in that
d) weight sensors are associated with the leaf spring mounting (39a, 39b; 42, 44), these responding to a physical change in the leaf spring region or to the separating carrier as the loading of the food processor with food varies.

2. A food processor according to claim 1, characterised in that the leaf spring mounting consists of individual leaf springs (39a, 39b), extending parallel to one another and held firmly at each end, of a rectangular hollow structure block (42) or of a connecting bar (44) with leaf spring characteristics.

3. A food processor according to claim 1 or 2, characterised in that the supporting housing, as an exterior partial housing (30), completely encloses the separating carrier designed as a separating frame (38), wherein the leaf spring mounting is designed as a double leaf spring attachment between these two parts, the said double leaf spring attachment being located on one side and staggered in height, and edge regions of the exterior partial housing (30) extend at an interference-free distance away from respectively adjoining wall regions of the interior separating frame (38) or the two wall regions extend into one another in a labyrinthine manner.

4. A food processor according to claim 1 or 2, characterised in that the supporting housing is an interior L-shaped carrier (30') which rests on the fixed base (32) on feet and is connected via a leaf spring structure block (42) to the separating carrier (38') which otherwise exhibits the shape of the food processor housing, the said interior L-shaped carrier also being covered by the said separating carrier.

5. A food processor according to claim 1, characterised in that the weight sensors are wire strain gauges arranged on the leaf springs (39a, 39b; 42, 44), whose analogue output signals are supplied after conditioning by an analogue/digital converter to the microprocessor for evaluation.

6. A food processor according to claim 1, characterised in that displacement-force pick-ups in the form of differential plunger-type coil arrangements, string balances, proximity switch arrangements on an inductive, capacitive and optical basis are provided as weight sensors.

7. A food processor according to claim 1, characterised in that while the machine is at a standstill, the microprocessor is switched to process weighing scale signals which reach it from the weight sensors arranged in the leaf spring region, the determined and calculated weight data being displayed by the microprocessor on a display panel (display 41).

8. A food processor according to claim 7, characterised in that the microprocessor is switched such that after a preset period has elapsed, it accepts a first determined and displayed weight value into its memory or continues to display it, and at the same time it performs automatic zero setting of the weight display and then displays newly added and weighed amounts of food with their correct weight and similarly accepts them into a memory.

9. A food processor according to claim 7 or 8, characterised in that an exterior operating arrangement (push-button) is provided in order to prepare the microprocessor, by the zero setting of its weight display, for a further subsequent weighing procedure.

## Revendications

1. Robot de cuisine pour des travaux préparatoires tels que la réalisation de mélanges, l'agitation, le pétrissage ou analogue, avec un système associé de balance pour déterminer le poids de produits alimentaires à traiter ou travailler et un circuit central de commande (microprocesseur) qui exploite et affiche les résultats de la pesée fournie par le robot, le cas échéant en fonction du déroulement des opérations, robot caractérisé en ce que :
a) il est prévu un bâti extérieur, stationnaire (30, 30') s'appuyant sur une base,
b) un support de découplage (38, 38'), intermédiaire, relié au bâti uniquement par un montage à ressortlames (39a, 39b ; 42, 44),
c) le support de découplage recevant lui-même tous les composants du robot de cuisine, y compris le mécanisme agitateur, le moteur et les pièces recevant les ingrédients (coupelle, bol 37, 37') et
d) le montage à ressorts-lames (39a, 39b ; 42, 44) est muni de capteurs de poids qui réagissent à une variation physique au niveau des ressort-lames ou du support de découplage lorsque le contenu du robot en produit alimentaire change.

2. Robot de cuisine selon la revendication 1, caractérisé en ce que le montage à ressorts-lames se compose de ressorts-lames distincts (39a, 39b) parallèles, encastrés aux deux extrémités, et d'un bloc à structure creuse (42) en forme de rectangle ou d'une entretoise de liaison (44) ayant des caractéristiques de ressorts-lames.

3. Robot de cuisine selon la revendication 1 ou 2, caractérisé en ce que le bâti comme la partie du bâti extérieure (30) entoure complètement le support de découplage réalisé sous la forme d'un châssis de découplage (38), le montage à ressorts-lames étant réalisé sous la forme d'une fixation à double ressorts-lames décalés en hauteur d'un côté, entre les deux parties et la zone marginale de la partie extérieure (30) du bâti rejoint à une distance qui ne gêne pas, les zones de paroi adjacente du châssis de découplage (38) intérieur ou encore les deux zones de paroi se rejoignent suivant un tracé en labyrinthe.

4. Robot de cuisine selon la revendication 1 ou 2, caractérisé en ce que le bâti est une poutre (30') intérieure, en forme de L, dont les pieds s'appuient sur une base fixe (32) et qui est reliée par un bloc à structure de ressorts-lames (42) au support de découplage (38') qui a par ailleurs la forme du carter du robot de cuisine et est également recouvert par celui-ci.

5. Robot de cuisine selon la revendication 1, caractérisé en ce que les capteurs de poids sont des jauges de contraintes associées aux ressorts-lames (39a, 39b ; 42, 44) dont les signaux de sortie analogiques sont fournis au microprocesseur en vue de leur exploitation après un traitement dans un convertisseur analogique/numérique.

6. Robot de cuisine selon la revendication 1, caractérisé en ce que les capteurs de poids sont des capteurs de déplacement sous la forme de bobines à plongeur différentiel, à balance à fil, à montage à commutateur de proximité, travaillant en mode inductif, capacitif ou optique.

7. Robot de cuisine selon la revendication 1, caractérisé en ce que l'arrêt du robot le microprocesseur traite les signaux de pesée fournis par les capteurs de poids associés à la zone des ressortslames, les indications de poids saisies et calculées par le microprocesseur étant affichées par un tableau d'affichage (Display 41).

8. Robot de cuisine selon la revendication 7, caractérisé en ce que le microprocesseur est conçu pour qu'après un certain temps, il enregistre dans sa mémoire une première valeur de poids saisie et affichée ou continue de l'afficher tout en effectuant automatiquement un réglage sur zéro de l'affichage du poids, puis affiche de nouvelles quantités de produits alimentaires, ajoutées, en indiquant leur poids correct et en les enregistrant également dans une mémoire.

9. Robot de cuisine selon la revendication 7 ou 8, caractérisé par un dispositif de commande externe (bouton-poussoir) permettant de préparer le microprocesseur par mise à zéro de son affichage du poids pour une autre opération de pesée, consécutive.
